# EUROPEAN PATENT APPLICATION

(11) **EP 3 496 180 A1**
(43) Date of publication of application: **12.06.2019**
(21) Application number: 17206267.1
(22) Date of filing: 08.12.2017
(51) Int. Cl.: H01M 2/10

(54) **ULTRA-LIGHTWEIGHT FIREPROOF BATTERY ASSEMBLY WITH PASSIVE COOLING AND OPTIONAL ACTIVE TEMPERATURE CONTROL**

(71) Applicant: Atnom S.R.L., Oradea (RO)
(72) Inventor: CRISAN, Octavian-Mircea, Oradea (RO)
(74) Representative: Buzlea, Mircea Valentin

(57) **Abstract**

The invention relates to an ultra-lightweight fireproof modular battery with passive cooling and optional active temperature control, having a special construction for modular assembly, each module comprising at least two rechargeable cells (1) arranged in thermal contact between a lower support (4) and an upper support (8) made of a low-weight material being high temperature resistant or enhanced by a flame retardant treatment; rechargeable cells (1) are connected by fusible connectors (6, 10, 12) properly positioned so to ensure both the parallel connection of the rechargeable cells (1), and also to connect in series some groups of parallel-connected cells (1), within the same modular assembly, in order to ultimately obtain the desired electrical parameters at the external collectors of the battery assembly's connectors (10, 12); rechargeable cells (1) might be stiffened between the thermal collectors of a radiator (2) using an adhesive fireproof thermoconductor (3); optionally, enclosure formed between supports (4, 8) communicates through inlet channels (7) with the enclosure formed between the supports of the following modules, for the circulation of a thermal transfer medium, and a battery management unit monitors temperature sensors positioned between the rechargeable cells (1), keeping the temperature within a recommended range, by heating rechargeable cells (1) if they are too cold or by cooling them if they are too hot, and if a rapid increase in temperature is detected, the heat transfer medium is pumped between the rechargeable cells (1) to quickly exhaust smoke/flame/heat through evacuation channels (17), thus preventing cascade accidents.

## Description

The invention relates to a modular battery which transfers the heat of some rechargeable cells to their supports made of a lightweight material, resistant to high temperature or being enhanced with a flame retardant treatment, the rechargeable cells being arranged between the thermal collectors of a radiator, and an adhesive thermoconductor partially covers the height of each rechargeable cell at least in the adjacent areas of the rechargeable cell with the radiator's heat collectors, each rechargeable cell being separated, whether by empty space or by fireproof insulating material, from other neighboring rechargeable cells situated in the same row; at the top and bottom the rechargeable cells are fastened between a lower support and an upper support, forming some enclosures at the top and at the bottom of each battery module, optionally providing some channels for injecting and discharging a heat transfer medium through, which facilitates an active temperature control of the assembly, while also being able to evacuate smoke and/or plasma caused by a thermal runaway of rechargeable cells, thus preventing occurrence of cascade accidents inside the battery assembly.

Prior art solutions for the protection of electric batteries against fire are known, of which WO2015158042 discloses a battery in a sealed casing having a cavity filled with fireproof material in the form of a dry powder disposed between a fireproof plate and the battery body; the fireproof plate may isolate the heat and control the fire; the dry powder extinguishing agent can directly turn off the fire, assuring the use of the battery and preventing the fire from penetrating outward, while preventing damage to the battery body.

Another solution for the protection of electrical batteries against self-ignition occurs in utility model CN205303622U representing a liquid-based heat exchanger structure of battery modules where several thermally insulated battery modules in the peripheral area are located in a sealed enclosure of which cavities are filled with liquid, the casing being provided with an inlet and an outlet for the liquid and having an insulating outer layer.

The disadvantage of the known solutions resides in that the rechargeable battery assemblies are greatly hampered by the auxiliary structures of the carcasses which cause significant material consumption and assembling the cells in battery is complicated by the technological processes involved in the need to seal the cases and to fill them with the fire retardant agent powder or liquid form according to each of the solutions presented in the prior art.

**Object of invention** relates to modular assembling of some serial and / or parallel interconnected rechargeable cells which are working together as a high-capacity cell, thereby facilitating the further serial connection of several identical groups of rechargeable cells, in order to represent a safe and effective solution for thermal control and fire protection during operation under diverse thermal conditions, keeping the weight of each module as light as possible.

**Technical problem** solved by invention is to provide a battery of a special construction design that allows modular assembling, consisting of rechargeable cells fixed between holders formed by a base support and a top support, forming certain enclosures between neighboring modules, optionally providing some channels designed for the inlet and outlet of a cooling medium, and a battery management unit which monitors some temperature sensors and controls the introduction of a large cooling medium flow to reduce the concentration of flammable gas produced by rechargeable cells, or to quickly evacuate the heat, smoke and/or flame that may occur in a thermal runaway of rechargeable cells, thus preventing the risk of self ignition and avoiding a cascade accident.

**Ultra-lightweight fireproof battery assembly with passive cooling and optional active temperature control** according to the invention, eliminates the disadvantages of known solutions in that it has a special construction that allows modular assembly, each module comprising at least two rechargeable cylindrical, prismatic or otherwise shaped cells, lithium or other types - such as supercapacitors, these rechargeable cells optionally being fixed between the thermal collectors of a corrugated radiator running from one side to another throughout entire module, by a fireproof adhesive thermoconductor which partially covers the height of each rechargeable cell at least in the adjacent areas of the rechargeable cell with the radiator heat collectors; each rechargeable cell is being separated, whether by empty space or by fireproof insulating material, from other neighboring rechargeable cells situated in the same row; the bottom side of each rechargeable cell is standing in thermal contact with a lower support made of a lightweight material, resistant at high temperature or enhanced with a flame retardant treatment, being rigidized by the drawing of some areas with holes and guides to maintain rechargeable cells aligned on their lower side; some plate-shaped electric insulators have perforations near the bottom electric pole of the rechargeable cells that selectively allow the contact between electric pole and the terminals of electrical collectors that also fulfill a role of safety fuses, positioned to ensure, by proper connection of the rechargeable cells' electric poles, both the parallel connection of rechargeable cells, and also the serial connection of some resulting groups formed by parallel connected rechargeable cells, within the same modular assembly, or otherwise the parallel connection of all rechargeable cells in the modular assembly may be performed, in order to ultimately obtain the desired electrical parameters at the external connectors of the electrical collectors; in the case of parallel connection of all the rechargeable cells in each modular assembly, the lower support and/or the upper support can be made of an electrically conductive material, in which case they can integrate the fusible electric collectors either by cutting them directly from the material of the lower support and/or the upper support respectively, whether by welding a fusible connector between one of the poles of each cell and the adjacent support to mentioned pole, for simplifying the construction and reducing the weight of the battery, and also the electrical insulators can be integrated into the lower and / in the upper support by applying a coating to isolate them electrically in the areas of their surface which are adjacent to rechargeable cells, so to selectively allowing electrical contact only between the areas of the electrical collectors and the corresponding pole of each rechargeable cell, respectively; optionally, the lower support is connected by some inlet channels for a heat transfer medium to an upper support made of a lightweight material, resistant at high temperature or enhanced with a flame retardant treatment, being rigidized by the drawing of some areas with holes and guides to maintain a thermal contact between the upper support and the upper side of each rechargeable cell; above collectors situated at the top of the modular assembly, there is a fireproof material, and the modular assembly at the top of the battery is covered with a top cover of the battery; the lower side of the bottom modular assembly is closed by a bottom cover of the battery and underneath the electrical collectors at the bottom of each modular assembly there is a fireproof material; optionally, on a side, through some inlet ports on the top of the battery, a heat transfer medium is pumped into the enclosure formed between the top cover of the battery and the upper support of the modular top assembly of the battery, which is communicating through the inlet channels of the heat transfer medium with the enclosures formed between the lower support and the upper support of the intermediate modular assemblies, and further on, also through the inlet channels of the thermal transfer medium with the enclosure formed between the lower support of the modular bottom assembly and the bottom cover of the battery, and on the other side, the enclosures communicate between each other in the opposite direction through some of evacuation channels of the thermal transfer medium to some evacuation outlets which are also positioned on the top of the battery, thus forming a circuit for thermal transfer medium; optionally, each battery assembly can be controlled by a battery management unit that monitors some temperature sensors positioned between the rechargeable cells, to keep their temperature within the optimum operating range specified by the rechargeable cells' manufacturer, by running the heat transfer medium through the inlet channels and evacuation channels to heat up the rechargeable cells if they are too cold or to cool down the rechargeable cells if they are too hot, while if the battery management unit detects a quick rise of temperature, heat transfer medium will be pumped through inlet channels into enclosures formed between modules, to rapidly exhaust the smoke / flames and the dangerous heat through the evacuation channels, thus preventing a cascade accident occurrence.

**Ultra-lightweight fireproof battery assembly with active cooling** according to the invention, presents the following **advantages**:
- ultra-lightweight design adds over the total mass of rechargeable cells just about 3% without active cooling, and between 5-7% with active cooling;
- can be used in the most diverse fields, including aeronautical industry among others;
- thermal insulation of rechargeable cells acts both as a thermal barrier to the external conditions of the battery, and also as a preventive mean against the possible extension of the fire outside the battery in which the cell overheating has occurred;
- represents a reliable solution due to constructive simplicity;
- modular assembly minimizes the usage of electronic control and monitoring equipment, to increase battery safety;
- constitutes an advantageous solution for operational improvement of rechargeable cells in most diverse thermal operating conditions, like adapting to variation of ambient temperature which occurs due to rapid altitude changes;
- reduces the energy consumption required to compensate the inertial effect, in the case of vehicles powered by modular batteries according to the invention.

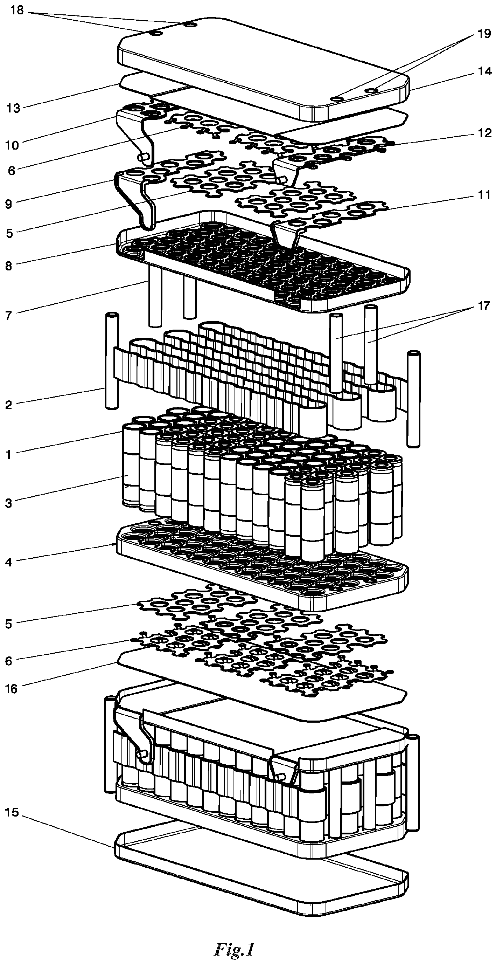

**A preferred embodiment** of an ultra-lightweight fireproof battery assembly with passive cooling and optional active temperature control, according to the invention is illustrated in **Fig. 1** which discloses the isometric representation of an electrical battery consisting of two vertically assembled modular assemblies, each of the modular assemblies comprising seventy-two lithium-based cylindrical rechargeable cells **1** aligned between some thermal collectors of a corrugated radiator **2** that run from one side to another throughout the whole module, and an adhesive and flame retardant thermoconductor **3** partly accommodates the height of each rechargeable cell **1** for structurally rigidizing the assembly, while also improving thermal transfer in the adjacent areas of the rechargeable cell **1** with thermal collectors of the radiator **2**. and, respectively, with neighboring rechargeable cells **1** of the same row.

The rechargeable cells **1** are fastened with their bottom sides in thermal contact with a lower support **4** made of aluminum sheet with a thickness of between 0.25 and 0.47 mm, reinforced by the drawing of areas with holes and certain guides to keep the rechargeable cells **1** aligned at the bottom thereof. Plate-shaped electric insulators **5** have perforations near the lower electric poles at the bottom of the rechargeable cells **1** which selectively allow electrical contact of the poles with the corresponding terminals of electric collectors **6** which also act as safety fuses.

The lower support **4** is connected through some inlet channels **7** for a heat transfer medium, in this case compressed air being used, to an upper support **8** made of aluminum sheet with a thickness of between 0.25 and 0.47 mm, stiffened by the drawing of areas with holes and certain guides to keep the upper part of rechargeable cells **1** aligned and in thermal contact with upper support **8**.

A plate-shaped electrical insulator **9** has perforations near the electric poles at the top of the adjacent cells **1** thus selectively allow poles contact with an electric collector **10** whose terminals also serve as safety fuses, the electrical collector **10** being provided with an external connector which represents one of the modular assembly's electric poles. A plate-shaped electrical insulator **11** has perforations near the electric poles of the adjacent cells **1** thus selectively enable pole contact with an electric collector **12** whose terminals also act as safety fuses, the electrical collector **12** being provided with an external connector which represents the other electric pole of the latter-mentioned modular assembly.

Electrical insulators **5**, **9**, **11** and electrical collectors **6**, **10**, **12** are positioned so as to ensure, by properly connecting the electric poles of the rechargeable cells **1**, both the parallel connection of rechargeable cells **1** and also the serial connection of some rechargeable cell groups **1**, within the same modular assembly, to ultimately obtain the desired electrical parameters at the external connectors, respectively corresponding to collectors **10**, **12**.

In this preferred embodiment, every two columns of rechargeable cells **1** are electrically connected in parallel, and the groups of such parallel-connected columns are connected, in their turn, in series.

Above the collectors situated at the top of the modular assembly there is a fire retardant material **13** and the modular assembly placed at the top of the battery is covered with a battery top cover **14**. The lower part of the bottom modular assembly is closed by a battery bottom cover **15**, and underneath the collectors **6** at the bottom of each modular assembly there is a flame retardant material **16**.

On the one hand, through some inlets **18** of the top battery cover **14**, the heat transfer medium is pumped into the enclosure formed between the top battery cover **14** and the upper support **8** of the modular assembly situated at the top of the battery, which communicates through the heat transfer medium inlet channels **7** with the enclosure formed between the lower support **4** of the previous-mentioned assembly and the upper support **8** of the next underneath modular assembly, and furthermore also through the heat transfer medium inlet channels **7**, with the enclosure formed between the lower support **4** and the bottom battery cover **15** of the modular assembly situated at the bottom of the battery, and on the other hand the above-mentioned enclosures communicate with each other in the opposite direction through some evacuation channels **17** of the heat transfer medium to some evacuation outlets **19** also located on the upper battery cover **14**, thereby forming a circuit for the thermal transfer medium.

Each battery assembly can be controlled by a battery management unit located outside it, which monitors some temperature sensors positioned between the rechargeable cells **1** to keep their temperature within the optimum operating range specified by manufacturer of the rechargeable cells **1**, by means of running a heat transfer medium through inlet channels **7** and evacuation channels **17** to heat the rechargeable cells **1** if they are too cold, respectively to cool the rechargeable cells **1** if they are too hot, and if the battery management unit detects a rapid increase in temperature, a stream of compressed air will be pumped into the enclosures between the rechargeable cells **1** through the intake channels **7** between the modules, to quickly exhaust the smoke / flame and the heat through the evacuation channels **17**, thus preventing the occurrence of a cascade accident.

The described example is only a particular embodiment of the invention, which is not limited to this particularization, the widest applicability of the disclosed technical solutions being obvious to a person skilled in the art.

**Bibliographic references:** WO2015158042, CN205303622U.

## Claims

1. **Ultra-lightweight fireproof battery assembly with passive cooling and optional active temperature control characterized in that,** it has a special construction that allows modular assembly, each module comprising at least two rechargeable cylindrical, prismatic or otherwise shaped cells (1), lithium or other types - such as supercapacitors, being separated in-between whether by empty space or by fireproof insulating material, and the bottom side of each rechargeable cell (1) being fastened in thermal contact with a lower support (4) made of a lightweight material, resistant at high temperature or enhanced with a flame retarding treatment, stiffened by the drawing of some areas with holes and guides to keep the cells (1) aligned at the bottom thereof; some plate-shaped electric insulators (5, 9, 11) have perforations near the bottom electric pole of the rechargeable cells (1) so to selectively allow the contact between electric poles and the terminals of some electrical collectors (6, 10, 12) that also fulfill a role of safety fuses, positioned to ensure, by properly connecting the electric poles of the rechargeable cells (1), whether both the parallel connection of rechargeable cells (1), and also the serial connection of some resulting groups formed by parallel connected rechargeable cells (1), within the same modular assembly, or otherwise, the parallel connection of all rechargeable cells (1) in the modular assembly may be performed, in order to ultimately obtain the desired electrical parameters at the external connectors of the electrical collectors (10, 12); the top side of each rechargeable cell (1) is fastened in thermal contact with an upper support (8) made of a lightweight material, resistant at high temperature or enhanced with a flame retardant treatment, being rigidized by the drawing of some areas with holes and guides to maintain rechargeable cells (1) aligned on their upper side; a fireproof material (13) is arranged in the upper part of the modular assembly, and the modular assembly situated at the top of the battery is covered with a battery top cover (14); the lower side of the modular assembly placed at the bottom of the battery is closed by a battery bottom cover (15) and a fireproof material (16) is provided in the lower part of each modular assembly.

2. **Ultra-lightweight fireproof battery assembly with passive cooling and optional active temperature control** according to Claim 1 **characterized in that,** rechargeable cells (1) are located between the thermal collectors of radiator (2) having a corrugated shape which is running from one side to the other of the whole module, and a fireproof adhesive thermoconductor (3) partially covers the height of each rechargeable cell (1) in the adjacent areas of the cell (1) with the thermal collectors of the radiator (2).

3. **Ultra-lightweight fireproof battery assembly with passive cooling and optional active temperature control** according to Claim 1 **characterized in that,** in the case of parallel connection of all the rechargeable cells (1) in each modular assembly, the lower support (4) and/or the upper support (8) are made of an electrically conductive material which will integrate the fusible electric collectors (6, 10, 12) either by cutting them directly from the material of the lower support (4) and/or the upper support (8) respectively, wether by welding a fusible connector between a pole of each rechargeable cell (1) and the adjacent support to mentioned pole, for simplifying the construction and reducing the weight of the battery assembly.

4. **Ultra-lightweight fireproof battery assembly with passive cooling and optional active temperature control** according to Claims 1 and 3 **characterized in that,** the lower support (4) and/or the upper support (8) are made of an electrically conductive material and the electrical insulators (5, 9, 11) are being integrated into the lower support (4) and / in the upper support (8) by applying a coating to isolate them electrically in the areas of their surface which are adjacent to rechargeable cells (1), so to selectively allowing electrical contact only between certain areas of the electrical collectors (6, 10, 12) and the corresponding pole of each rechargeable cell (1), respectively.

5. **Ultra-lightweight fireproof battery assembly with passive cooling and optional active temperature control** according to Claim 1 **characterized in that,** through some inlet ports (18) on the battery top cover (14), a heat transfer medium is pumped into the enclosure formed between the battery top cover (14) and the upper support (8) of the modular assembly placed at the top of the battery, which is communicating through some inlet channels (7) of the thermal transfer medium with other enclosures formed between the lower support (4) and the upper support (8) of the intermediate modular assemblies, and further on, also through the inlet channels (7) of the thermal transfer medium, with the enclosure formed between the lower support (4) of the modular assembly situated at the bottom of the battery and the battery bottom cover (15), and on the other side, the enclosures communicate between each other in the opposite direction through some evacuation channels (17) of the thermal transfer medium towards some evacuation outlets (18) also positioned on the battery top cover (14), thus forming a circuit for thermal transfer medium; a battery management unit is provided outside of the battery, which monitors some temperature sensors positioned between the rechargeable cells (1), to keep their temperature within the optimum operating range specified by manufacturer of the rechargeable cells (1), by running the heat transfer medium through the inlet channels (7) and evacuation channels (17) to heat up the rechargeable cells (1) if they are too cold, or to cool down the rechargeable cells (1) if they are too hot, while if the battery management unit detects a quick rise of temperature, heat transfer medium will be pumped through inlet channels (7) into enclosures formed between modules, to rapidly exhaust the smoke / flames and the dangerous heat through the evacuation channels (17), thus preventing a cascade accident occurrence.
